# EUROPEAN PATENT SPECIFICATION

(11) **EP 2 253 115 B1**
(45) Date of publication and mention of the grant of the patent: **03.04.2013**
(21) Application number: 08708968.6
(22) Date of filing: 13.02.2008
(51) Int. Cl.: H04L 27/26, H04L 5/00

(54) **BAND-EFFICIENT METHOD AND SYSTEM FOR TRANSMITTING/RECEIVING A COMMUNICATION SIGNAL USING A CHANNEL BAND**
BANDEFFIZIENTES VERFAHREN UND SYSTEM ZUM SENDEN/EMPFANGEN EINES KOMMUNIKATIONSKANALS UNTER VERWENDUNG EINES KANALBANDS
PROCÉDÉ ET SYSTÈME EFFICACES DU POINT DE VUE DE LA BANDE POUR ÉMETTRE/RECEVOIR UN SIGNAL DE COMMUNICATION À L'AIDE D'UNE BANDE DE CANAL

(43) Date of publication of application: 24.11.2010
(73) Proprietor: Telespazio S.p.A., 00156 Roma (IT)
(72) Inventor: CALVITTI, Cristina, I-00199 Roma (IT); LO FARO, Manuela, I-00199 Roma (IT); DE LUCA, Damiano, I-00034 Colleferro (IT)
(74) Representative: Jorio, Paolo
(86) International application number: PCT/EP2008/051761
(87) International publication number: WO 2009/100761

(56) References cited:
- WO-A-2007/052995
- WO-A-2007/053196
- WO-A-2007/056020
- RUILIANG CHEN ET AL: "Ensuring Trustworthy Spectrum Sensing in Cognitive Radio Networks" NETWORKING TECHNOLOGIES FOR SOFTWARE DEFINED RADIO NETWORKS, 2006. SDR '06.1ST IEEE WORKSHOP ON, IEEE, PI, 1 September 2006 (2006-09-01), pages 110-119, XP031124517 ISBN: 978-1-4244-0733-0
- H-S CHEN ET AL: "Signature Based Spectrum Sensing Algorithms for IEEE 802.22 WRAN" COMMUNICATIONS, 2007. ICC '07. IEEE INTERNATIONAL CONFERENCE ON, IEEE, PI, 1 June 2007 (2007-06-01), pages 6487-6492, XP031126706 ISBN: 978-1-4244-0353-0
- LEI CHEN ET AL: "An Adaptive Cooperative Spectrum Sensing Scheme Based on the Optimal Data Fusion Rule" WIRELESS COMMUNICATION SYSTEMS, 2007. ISWCS 2007. 4TH INTERNATIONAL SYMPOSIUM ON, IEEE, PISCATAWAY, NJ, USA, 1 October 2007 (2007-10-01), pages 582-586, XP031166836 ISBN: 978-1-4244-0978-5
- ZHANG YU ET AL: "Cooperative Spectrum Sensing Technique" WIRELESS COMMUNICATIONS, NETWORKING AND MOBILE COMPUTING, 2007. WICOM 2007. INTERNATIONAL CONFERENCE ON, IEEE, PISCATAWAY, NJ, USA, 21 September 2007 (2007-09-21), pages 1167-1170, XP031261473 ISBN: 978-1-4244-1311-9
- KANG G SHIN ET AL: "An Experimental Approach to Spectrum Sensing in Cognitive Radio Networks with Off-the-Shelf IEEE 802.11 Devices" CONSUMER COMMUNICATIONS AND NETWORKING CONFERENCE, 2007. CCNC 2007. 20 07 4TH IEEE, IEEE, PI, 1 January 2007 (2007-01-01), pages 1154-1158, XP031087963 ISBN: 978-1-4244-0667-8
- SHENG-YUAN TU ET AL: "Spectrum Sensing of OFDMA Systems for Cognitive Radios" IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168658 ISBN: 978-1-4244-1143-6

## Description

### FIELD OF THE INVENTION

The present invention relates to the field of the telecommunication systems. More in particular, the present invention relates to the methods and the systems for efficiently transmitting/receiving a communication signal using a channel band.

### BACKGROUND OF THE INVENTION

In a telecommunication system user data are converted into signals suited to be transmitted over a channel, which may comprise a copper wire, an optical fiber, a free space channel, etc. Depending on physical characteristics, the channel has a frequency band, also known as channel band, or band, in which signals can be effectively transmitted.

Based on the channel and on the channel band, signals, which usually are electromagnetic signals, are generated so as to optimize the telecommunication system throughput, that is the amount of data effectively transmitted by all the users of the telecommunication system. Of course, more than one telecommunication system may access the channel.

The generation of the signals comprises two main operations: a modulation operation, including mapping the user data on changes of physical quantities of the electromagnetic signal, such as a carrier phase, frequency and/or amplitude; a multiplexing operation, including sharing the channel band among independent users, that is among their data flows.

Besides advanced modulation schemes, such as Phase Shift Keying (PSK), Binary Phase Shift Keying (BPSK), Quadrature Phase Shift Keying (QPSK), Quadrature Amplitude Modulation (QAM), etc., several multiplexing techniques have been proposed in order to maximise the channel band exploitation.

Generally, in known telecommunication systems, the band is not used in an efficient manner. In fact, each user of the telecommunication systems exploiting the channel is statically given a portion of the band, hereinafter referred to as subband, centred around a subband central frequency, which is typically the frequency of a corresponding subcarrier. The subband is used just when the user effectively transmits data, being unused when the user is silent. In such a way, the occupation, meant as effective utilization, of each subband and, consequently, of the overall band, depends on the behaviour of the users. Since not all the users transmit all the time, partial inactivity periods occur, leading to a low spectral efficiency, meant as the ratio between an amplitude of a range of frequencies carrying information and the overall channel bandwidth, because each subband is dedicated to a single user and cannot be shared among different users.

Users may belong to different telecommunication systems, exploiting different modulation and/or multiplexing techniques. Generally, each telecommunication system accessing the channel makes use of a predetermined portion of the channel band. In any case, from a practical point of view, the less the users transmit, the lower is the overall spectral efficiency.

Furthermore, from a temporal point of view, the channel band is composed by a set of used subbands, occupied by signals emitted by users effectively transmitting, alternated with free frequency gaps, corresponding to subbands dedicated to users not transmitting. Of course, since user behaviour (to transmit or not) varies in time, the band occupation varies accordingly.

Besides spectral inefficiency, such a band occupation provides for high costs for those users who need to transmit just in a short time range. In fact, generally users have to pay for their subbands, irrespective of the effective time of use.

As an example, institutional organizations, such as Rescue Team or Fire Brigade, are badly affected by such a kind of band allocation, since they have to pay for a dedicated subband which, in practice, is used just for a small amount of time, that is when emergencies occur. These emergencies being rare, the dedicated subband stays unused nearly all the time.

Besides these commercial aspects, from a technical point of view the spectral efficiency is further reduced by the necessity of keeping as low as possible the interference between adjacent subbands. In fact, since the spectrum of the signals transmitted in the subbands is not limited in frequency, each signal spectrum has queues extending beyond the frequency boundaries of the respective subband, thus interfering with signals transmitted in adjacent subbands. In order to keep interferences under control, guard bands are introduced between adjacent subbands. From a practical point of view, these guard bands comprise unused portions of the band, that is free frequency gaps alternating with the subbands used by the users of the telecommunication systems accessing the channel.

In such a way, the interference is reduced, because just the reduced parts of the spectrum queues overlap with other transmitted signals. Unfortunately, the overall band occupation is reduced, entailing a further spectral efficiency reduction.

This being the typical band occupation of a physical channel, the signals sent within the subbands may be modulated and multiplexed in several known manners. Furthermore, signals in different subbands are generally managed by different telecommunication systems, exploiting different modulations and multiplexing techniques. In particular, one of the most important multiplexing techniques is Orthogonal Frequency Division Multiplexing (OFDM).

In an OFDM system the overall channel band available to the system itself is divided into a large number of subcarriers closely-spaced in frequency and arranged within the channel band so as to be orthogonal to each other. Each subcarrier corresponds to a respective subband and is modulated with a conventional modulation scheme (PSK, QAM, etc.) at a low bit rate, maintaining data rates similar to those of a conventional single-carrier modulation scheme operating in the same subband.

From a practical point of view, OFDM signals are generated and received by using the Fast Fourier Transform (FFT) algorithm.

The OFDM technique makes a transmission more resilient with respect to harsh channel conditions, such as high frequency attenuation in a long copper wire, narrowband interferences, frequency-selective fading due to multipath, etc., without the need for complex signal processing techniques, such as channel equalization. For example, in ODFM systems, the channel equalization may be accomplished in a simplified manner, because the OFDM signal may be regarded as a number of slowly-modulated narrowband signals, rather than one rapidly-modulated wideband signal.

In this connection, WO 2007/052995 discloses a method for using a flexible bandwidth in an OFDMA-based cognitive radio system, and a base station (BS) and a subscriber station using the method. Said method includes: allocating a channel band from among unused dedicated channel bands having a bandwidth that is a natural number times a bandwidth resolution to customer premises equipment (CPE), wherein the bandwidth resolution is a predetermined bandwidth smaller than a bandwidth of a broadcast channel band, and transmitting an OFDMA-based signal comprising band allocation information indicating information regarding the allocated channel band.

### OBJECT AND SUMMARY OF THE INVENTION

The aim of the present invention is to solve at least in part the drawbacks of the prior art.

According to the invention, a method and a system for transmitting/receiving a communication signal using a channel band are provided, according to the appended claims.

### DESCRIPTION OF THE FIGURES

For the understanding of the present invention, a preferred embodiment is now described, purely as a non-imitative example, with reference to the enclosed drawings, wherein:
- Figure 1 shows a block scheme of an OFDM transceiver
- Figure 2 shows an illustrative scheme of a band occupation;
- Figure 3 shows an illustrative example of an efficient band occupation;
- Figures 4, 5 and 6 show the band occupation of Fig. 2 in subsequent steps of the present method.

### DETAILED DESCRIPTION OF THE INVENTION

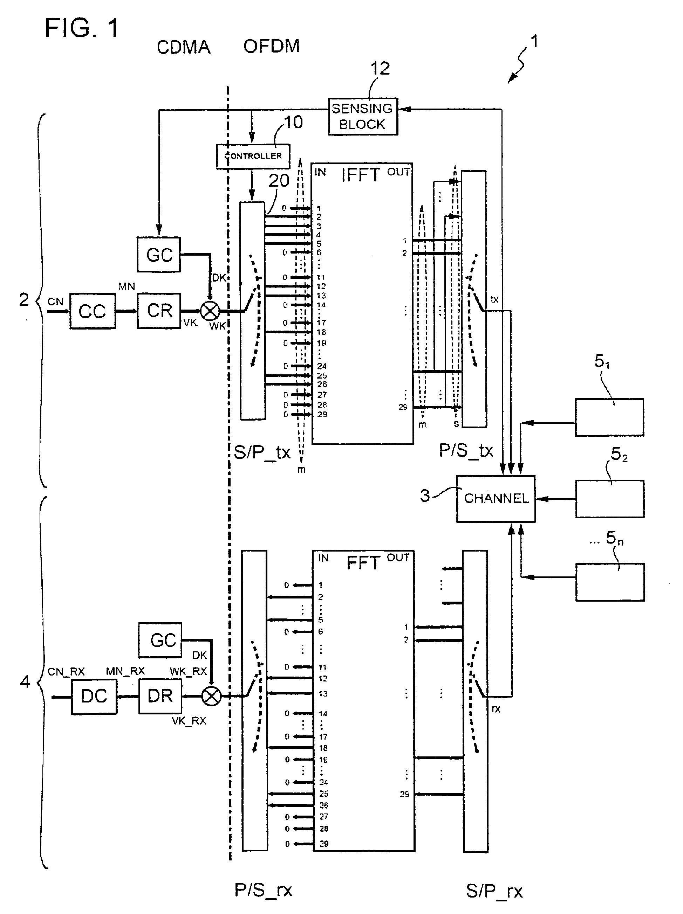

Figure 1 shows an OFDM telecommunication system 1, comprising a transmitting part 2 and a receiving part 4, connected to a channel 3. The channel 3 is shared with existing telecommunication systems 5₁, 5₂, -, 5ₙ. The OFDM telecommunication system 1 and the existing telecommunication systems 5₁, 5₂, ..., 5, are wireless (such as WiMAX or satellite), or wired.

The illustrated OFDM telecommunication system 1 makes use of a Code Division Multiple Access (CDMA) technique. Accordingly, the transmitting part 2 comprises a modulator CC which receives a data stream CN, formed by signals issued by source and channel coding blocks (not shown in Figure 1) known to the man skilled in the art. The modulator CC may be a BPSK modulator, a QPSK modulator, a 8-PSK modulator, or any known modulator, and, in a per se known manner, outputs a modulated symbol stream MN formed by a plurality of symbols, a symbol being the smallest amount of data transmitted together by the OFDM telecommunication system 1. The modulated symbol stream MN is inputted to a repetition coder CR, which generates a repeated symbol stream VK wherein each input symbol of the modulated input stream MN is repeated a number of times equal to the length L of a CDMA code DK. Therefore, for each input symbol of the modulated input stream MN the repetition coder CR generates a corresponding sequence of L samples, all of them equal to the input symbol. The time duration of each sequence corresponding to a single input symbol is equal to the time duration of the input symbol itself, that is the L samples, hereinafter referred to as chips, have a time duration L times shorter than the time duration of an input symbol. Equivalently, the chips have a frequency L times greater than the input symbol frequency.

The repeated symbol stream VK outputted by the repetition coder CR is further multiplied by the CDMA code DK, that is a code having a length of L chips, generated in a per se known manner by a spreader GC at a frequency equal to the frequency of the chips, and made up of a sequence of ±1. This multiplication is known as "spreading" and characterizes the CDMA technique, allowing to obtain a spread sequence WK having a power spectral density in a band which is L time larger than the band of the signal object of the spreading, that is the modulated symbol stream MN. Because of the content of the CDMA code DK, that is the ±1 chips, the spread sequence WK has the same power as the modulated symbol stream MN and a band which is L times larger than the band of the modulated symbol stream MN, thus its power spectral density is L times lower than the power spectral density of the modulated symbol stream MN.

The spread sequence WK is sent to a serial to parallel converter S/P_tx having two input ports and a number *n*_out of output ports, equal to the number of OFDM subcarriers employed by the OFDM telecommunication system 1. As explained in more detail hereinafter, the chips of the spread sequence WK inputted to the serial to parallel converter S/P_tx are outputted on just n (with *n<n_out)* output ports (shown in Figure1) of the serial to parallel converter S/P_tx itself, which parallelizes the spread sequence WK into so-called OFDM symbols, that is groups of n chips. From an operative point of view, one input port of the serial to parallel converter S/P_tx is connected to a controller 10, in turn connected to a sensing block 12, as discussed in more detail later on. The n output ports of the serial to parallel converter S/P_tx are connected to n input ports of an Inverse Fast Fourier Transform block IFFT, having *m* input ports in total, with *m ≥ n*. The *m-n* ports of the Inverse Fast Fourier Transform block IFFT not connected to the n output ports of the serial to parallel converter S/P_tx are fed with zeros.

The Inverse Fast Fourier Transform block IFFT performs an Inverse Fast Fourier transform of the OFDM symbol, outputting m IFFT output samples on the m output ports of the Inverse Fast Fourier Transform block IFFT.

According to the OFDM technique, each input port of the Inverse Fast Fourier Transform block IFFT corresponds to a subcarrier of the OFDM telecommunication system 1; therefore, when an output port (e.g., output port 20) of the serial to parallel converter S/P_tx is connected to an input port of the Inverse Fast Fourier Transform block IFFT, the symbols coming out from output port 20 are transmitted using the subcarrier associated with the connected input port of the Inverse Fast Fourier Transform block IFFT.

The Inverse Fast Fourier Transform block IFFT is connected to a parallel to serial converter P/S_tx, having s input ports and one output port, with s greater than m. In practice, the m output ports of the Inverse Fast Fourier Transform block IFFT are connected to the last m input ports of the parallel to serial converter P/S_tx, whereas the first s-m input ports of the parallel to serial converter P/S_TX are fed with copies of the last *s-m* IFFT output samples, so as to preserve the intelligibility of the OFDM symbol. The *s-m* copies of the last *s-m* IFFT output samples form a so-called guard interval.

The output of the parallel to serial converter P/S_tx is connected to the channel 3, eventually by means of a proper transmitter, such as an antenna, an optical source or the like (not shown in Figure 1).

On the receiving part 4 of the OFDM telecommunication system 1, operations inverse to those done at the transmitting part 2 are performed. In particular, incoming signals are firstly parallelized by a serial to parallel converter S/P_rx, so as to reproduce the OFDM symbols and, at the same time, remove the guard intervals. Afterwards, the OFDM symbols undergo a Fast Fourier Transform operation, performed by a Fast Fourier Transform block FFT. In particular the Fast Fourier Transform block FFT outputs a set of chips which, after the removal of the zeros inserted in transmission, are serialized by a parallel to serial converter P/S_rx, outputting a sequence WK_RX. The serialized chips of the sequence WK_RX are multiplied by the CDMA code DK, this operation being known as "despreading", and the sequence VK_RX so obtained is inputted to a repetition decoder DR, which integrates L chips of the sequence VK_RX so as to get a replica MN_RX of the original modulated input stream MN. Finally, a constellation decoder DC demodulates the replica MN_RX to recover the data stream CN.

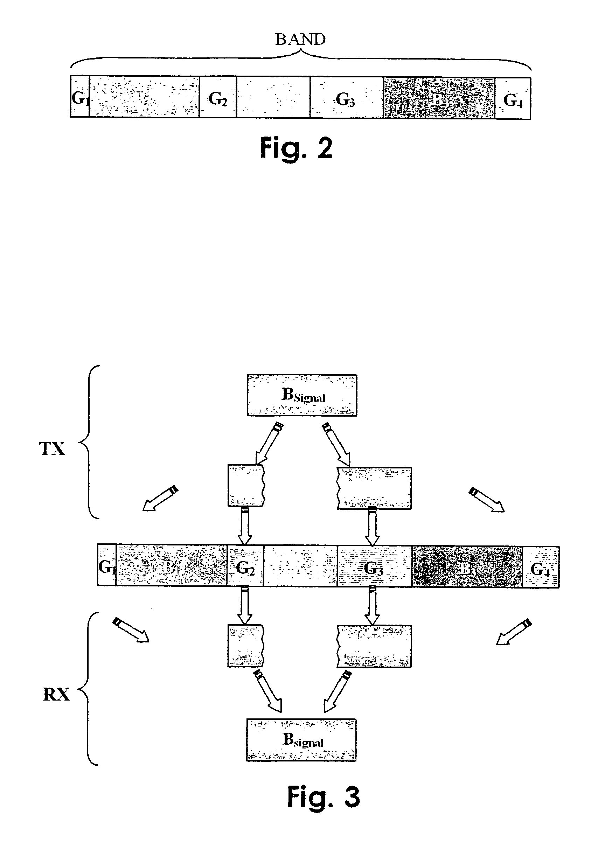

In order to understand the present method, please refer to Figure 2, showing an illustrative example of a band occupation of the channel 3 at a given time instant t0. In particular, B1, B2 and B3 represent used subbands, that is subbands dedicated to users of the telecommunication systems 5₁, 5₂, ..., 5ₙ accessing the channel 3 at the time instant t0, therefore effectively transmitting at the time instant t0. The telecommunication systems 5₁, 5_{2,} ..., 5ₙ manage the communications of their users exploiting any modulation and multiplexing techniques. G1-G4 are free subbands, that is both guard bands and dedicated subbands assigned to users of telecommunication systems 5₁, 5₂, ..., 5ₙ not transmitting at the considered time instant t0, these dedicated subbands assigned to telecommunication systems 5₁, 5₂, ..., 5ₙ not transmitting in the considered time instant becoming used subbands at time instants at which their respective users transmit. It is clear that the definitions "free subbands" and "used subbands" are referred to a given time instant, the dedicated subbands assigned to users not transmitting in the considered time instant having to be considered as free subbands.

In order to efficiently exploit the available band, it is important to rationally occupy all the subbands, making use also of the free subbands, which, in known telecommunication systems, stay unused.

Furthermore, a full band exploitation has to be accomplished without affecting signals transmitted in the used subbands, that is the signals transmitted in the dedicated subbands by the telecommunication systems accessing the channel 3 at the time instant t0. It has to be noted that signals in the used subbands can be transmitted by exploiting whatever modulation and/or multiplexing technique. For the present method, used subbands are simply subbands not available for transmission.

Figure 3 shows how it is possible to achieve a full exploitation of the free subbands. In particular, given a physical channel 3 having its predetermined subband allocation scheme, meant as predetermined number of telecommunication systems 5₁, 5₂, ..., 5ₙ accessing the channel 3 and corresponding assignment of the dedicated subbands, let's suppose that a further signal, not provided at the time instant t0 and having a band *Bsignal,* is to be transmitted later, at a time instant t1. The further signal can be transmitted and received by dividing its band *Bsignal* into a suitable number of parts such as to fill the free subbands, transmitting it, and then reconstructing it, simply by reconstructing its spectrum, as explained in more detail below.

For the sake of simplicity, the following description refers to the case of just one further signal, but the present method can be directly extended to the case of more further signals. The transmission of the further signal is obtained by exploiting the OFDM technique, which provides for a subdivision of the overall band of the physical channel 3 into subbands whose subcarrier central frequencies are orthogonal to each other. In fact, given a period *Ts,* equal to the time duration of each symbol transmitted in a OFDM system, the subcarriers of a OFDM system have frequencies multiple of a fundamental frequency equal to the inverse of the period *Ts.* Because of trigonometric properties, integrating any two subcarriers over a period *Ts* leads to zero.

Orthogonal subcarriers are independent one another and can be turned on or off independently, therefore it is possible to decide whether to use specific subcarriers, according to the user needs. Consequently, when using a OFDM technique, a signal occupying a certain band *Bsignal* does not have to be transmitted over a single subband whose amplitude is equal to the signal bandwidth, but it can be transmitted over non-adjacent subbands, provided that the overall used bandwidth is equal to the width of the band *Bsignal.*

More in detail, the transmission of the further signal in the free subbands is accomplished by the OFDM telecommunication system 1 shown in Figure 1. In particular, the sensing block 12 detects the n free subcarriers and generates corresponding signals fed to the controller 10. The sensing block 12 also calculates the available free band length, that is the sum of the free subband lengths, and provides it to the spreader GC, which uses the available free band width to determine the length L of the CDMA code DK.

The controller 10 causes the spread sequence WK to be sent to the n output ports of the serial to parallel converter S/P_tx and onto the inputs of the Inverse Fast Fourier Transform block IFFT corresponding to free subcarriers. The inputs of the Inverse Fast Fourier Transform block IFFT corresponding to the used subcarriers, as well as any *m-n* input ports of Inverse Fast Fourier Transform block IFFT are fed with zeros.

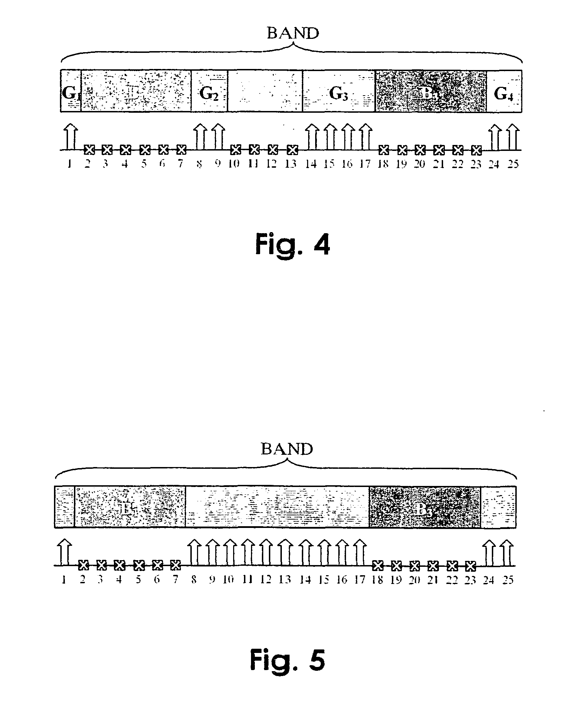

The described relationships between the serial to parallel converter S/P_tx, the Inverse Fast Fourier Transform block IFFT and the subcarriers of the OFDM telecommunication system 1 allow to transmit the further signal in the free subbands. The input ports of the Inverse Fast Fourier Transform block IFFT connected to zeros indicate that the corresponding subcarriers are not used for transmission by the OFDM telecommunication system 1, because they correspond to used subbands, that is dedicated subbands in use by the users of the telecommunication systems 5₁, 5₂, ..., 5ₙ effectively transmitting. More in detail, the illustrative representation of the OFDM telecommunication system 1 in Figure 1 refers to the band occupation illustrated in Figure 4, which shows the band occupation at a time instant t0, analogously to Figure 2, as well as the arrangement of the OFDM subcarriers in the subbands. The correspondence between subcarriers and input ports of the Inverse Fast Fourier Transform block IFFT shown in Figure 1 may be appreciated considering the known frequency shift characterizing the Inverse Fast Fourier transform and the addition, with respect to the subcarrier arrangement shown in Figure 4, of four lateral subcarriers, that is two lateral subcarriers per side of the channel band, set to zero. In Figure 4, the subcarriers used by the OFDM telecommunication system 1 are shown by arrows, while the unused subcarriers are shown by crosses. It is important to note that in the OFDM telecommunication system 1 the subdivision of the overall band in subbands is accomplished independently from the effective band occupation, thus prior to any sensing of the channel 3. When the OFDM telecommunication system 1 receives a request of transmission of a further signal, it senses all the subcarriers so as to detect the guard bands and the subcarriers unused by the telecommunication systems 5₁, 5₂, ..., 5ₙ. Afterwards, the OFDM telecommunication system 1 turns on all the subcarriers corresponding to the free subbands.

In known OFDM systems, subcarriers are turned on and off in case the channel is selective in frequency: signals are transmitted just over subbands with low losses, so as to preserve the transmission quality, turning off subcarriers experiencing a high degradation along the channel.

According to the present method, the further signal is transmitted using the free subbands, that is in free frequency ranges, so as not to overlap it with other already established communications exploiting the dedicated subbands, therefore transmitting the further signal transparently to the users of the telecommunication systems 5₁, 5₂, ..., 5ₙ; in fact, the dedicated subbands used by the users of the telecommunication systems 5₁, 5₂, ..., 5ₙ are unchanged, so the users do not experience any communication degradation.

The described method may be easily implemented on a terminal capable of sensing the channel 3 by using known means and techniques, so as to determine the subcarrier frequency, as well as if the subcarriers are in use or not, irrespective of whether free subcarriers correspond to dedicated subbands assigned to users silent in the considered instant, or to guard bands.

For example, assuming that, as shown in Figure 4, the overall band is virtually divided into 25 OFDM subcarriers, it is possible to transmit a further signal by using the subcarriers n. 1, 8, 9, 14, 15, 16, 17, 24 and 25, that is the subcarriers corresponding to the G1, G2, G3 and G4 free subbands, and turning off the other subcarriers.

Since the guard bands and the originally unused dedicated subbands are now used by the OFDM telecommunication system 1 to carry the further signal, the interference, due to the overlapping between the queues of the further signal spectrum and the spectra of the signals transmitted by the telecommunication systems 5₁, 5₂, ..., 5ₙ, is no more mitigated by free frequency gaps. In order to overcome this problem, the data stream corresponding to the further signal is managed according to the CDMA technique.

As said before, according to this technique, the further signal data stream is multiplied with a CDMA code made up of a sequence of ±1, this code length being equal to L. By performing this operation, the power spectral density of the further signal is spread over a band which is L times larger than the further signal original bandwidth, that is the band strictly necessary to transmit the further signal. Since the CDMA code contribution to a power spectral density is unitary, the further signal power is unchanged and, consequently, its power spectral density is reduced by L times.

Therefore, the transmission of the further signal causes an interference with the communications of the telecommunication systems 5₁, 5₂, ..., 5ₙ, but this interference is in the order of the thermal noise, thus not damaging significantly the users of the telecommunication systems 5₁, 5₂, ..., 5ₙ. In any case, possible transmission errors can be managed in known manners (e.g. by means of Forward Error Correction codes).

As apparent from the above description, the CDMA technique helps keep as low as possible the interference induced by the further signal transmitted in the free subbands on the signals transmitted by the telecommunication systems 5₁, 5₂, ..., 5ₙ according to the subband allocation scheme of the channel 3.

Furthermore, the CDMA technique helps limit the interference that signals transmitted by the users of the telecommunication systems 5₁, 5₂, ..., 5ₙ according to the subband allocation scheme induce on the further signal transmitted in the free subbands. In fact, in reception, in order to recover the further signal, another multiplication with the same CDMA code used in transmission is accomplished. This operation reduces the band of the received signal to the original band *Bsignal* of the further signal, and spreads all the interfering signals, because these latter signals experience just one multiplication with the CDMA code, which reduces their impact on the further signal to a level in the order of the thermal noise.

Besides these advantages in terms of resilience to the interference, by employing the CDMA technique and the OFDM technique, it is possible to practically implement the division of the band *Bsignal* of the further signal into the free subbands, as well as to manage more than one further signal. In fact, the presence of more than one further signal is managed simply by assigning different CDMA codes to different signals, corresponding to different users of the OFDM telecommunication system 1. In reception, the multiplication with the same CDMA codes allows to understand which user is associated with the received further signal.

Concerning the division of the band of the further signal, in order to spread the further signal Band *Bsignal* over all the free subbands, the transmitting part 2 calculates a length L of the CDMA code, as a function of the overall free band (sum of all the free subbands) and the band *Bsignal* of the further signal. Then, the assignment of the further signal to each free subcarrier is accomplished by the OFDM technique, by connecting the outputs of the serial to parallel converter S/P_tx to all the input ports of the Inverse Fast Fourier Transform block IFFT corresponding to the free subcarriers.

From a practical point of view, the present method dynamically controls, instant by instant, the subcarriers turned on or off, that is the subbands used or not by the telecommunication systems 5₁, 5₂, ..., 5ₙ. In fact, in real telecommunication systems users initiate and conclude transmissions, respectively setting free or occupying their dedicated subbands. Furthermore, the transmission of the further signal occurs in a finite time, thus leading to continuous changes in the band occupation. In both cases the present method tracks the changes in the subband allocation scheme. Thanks to the ease of controlling the subcarriers (turned on or off) within an OFDM system, the present method provides for adapting to the instant band occupation. Of course, this result may be achieved provided that both the transmitter and the receiver can be configured while in use; for example, they could be Software Radio terminals.

The present method can be implemented by CDMA over OFDM terminals capable of sensing the channel 3 not only before setting up the transmission, but also during the transmission itself, so as to promptly respond to changes in the use of the subbands. Figure 5 shows an illustrative example of the band occupation in a time instant t2>t1, and shows, if compared with Figure 4, the time evolution of the band occupation, supposing that the user who, at the time instant t0, was transmitting in the dedicated subband B2 has concluded the transmission at the time instant t2. The subcarriers overlapping with the dedicated subband B2, that is subcarriers n. 10, 11, 12 and 13, can be turned on to transmit the further signal.

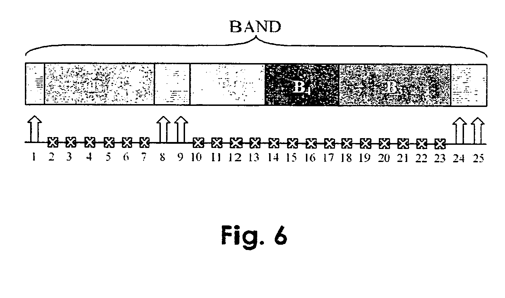

On the contrary, let's assume that in a time instant t3 the user to whom the G3 band (please refer to Figure 4 and Figure 6) is dedicated, previously silent, decides to start a communication. In such a situation, the OFDM telecommunication system 1 realizes that the G3 subband is no more available for transmission, therefore it turns off the subcarriers n. 14, 15, 16 and 17, overlapping with the G3 subband, and modifies the length L of the CDMA code, so as to transmit the further signal using the available subcarriers n. 1, 8, 9, 24, 25. This leads to the overall band occupation shown in Figure 6, wherein B4 indicates the former subband G3. Alternatively, instead of modifying the length of the CDMA code, the OFDM telecommunication system 1 may reduce the number of users who can transmit at the same time, as explained in more detail below. In any case, before the turning off of the subcarriers corresponding to the B4 subband, there is a small amount of time during which the further signal and the signals transmitted by the telecommunication systems 5₁, 5₂, ..., 5ₙ coexist within the same subband B4. That occurs because the OFDM telecommunication system 1 reacts to changes in the band occupation in a finite time. In any case, the CDMA technique, which enlarges the bandwidth of the further signal, guarantees good transmission performances, because the interference is in the order of the thermal noise.

On reception, the receiving part 4 of the OFDM telecommunication system 1 implementing the present method reconstructs the band *Bsignal* of the further signal based on the symbols carried by the subcarriers used on the transmitting part 2 to transmit the further signal itself. In order to understand which subcarriers effectively carry information associated with the further signal, the receiving part 4, like the transmitting part 2, periodically senses the channel 3 so as to understand the used subbands and the free subbands. For example, referring to Figure 4, showing the band occupation at the time instant t0, the receiving part realizes that the subcarriers n. 1, 8, 9, 14, 15, 16, 17, 24 and 25 correspond to free subbands. Assuming that the transmission of the further signal over the channel 3 starts at the time instant t1, and assuming that the time required for a signal to pass through the channel 3 is negligible, at the time instant t1 the receiving part 4 realizes that the subcarriers n. 1, 8, 9, 14, 15, 16, 17, 24 and 25, free at the time instant t0, are occupied at the time instant t1, therefore the receiving part 4 understands that the further signal is being transmitted on the subcarriers n. 1, 8, 9, 14, 15, 16, 17, 24 and 25. From a practical point of view, the receiving part 4 reconstructs the further signal based on the information (symbols) carried by the subcarriers detected as free at the time instant t0. The receiving part 4 keeps track of the subcarriers detected as free at the time instant t0 until a next sensing of the channel 3, e.g. performed at a time instant t4. The receiving part 4 senses the channel 3 and keeps track of the subcarriers detected by means of known techniques, implemented by known blocks not shown in Figure 1.

From an operative point of view, it has to be noted that, when the telecommunication systems 5₁, 5₂, ..., 5ₙ not using the subbands effectively begin to transmit data, and thus begin to effectively use their dedicated subbands, the present method has less subcarriers available, because of the turning off of the subcarriers corresponding to said dedicated subbands. Nevertheless, according to the present method, the users of OFDM telecommunication system 1 do not reduce their throughput: they can keep constant their transmission bit-rates, as far as these bit-rates are low with respect to the maximum bit-rate permitted to each user of the OFDM telecommunication system 1, this maximum bit-rate being equal to 1/Tᵤ, where Tᵤ is the OFDM symbol time. For example, transmission bit-rates may be in the range 30 Kb/s - 300 Kb/s.

In fact, when dedicated subbands are turned on by the users of the telecommunication systems 5₁, 5₂, ..., 5ₙ, the number of users of the OFDM telecommunication system 1 is reduced, but the throughput of the users effectively transmitting stays unchanged.

More in detail, assuming that B is the overall band available and N is the number of the OFDM subcarriers, each subcarrier has a corresponding subband equal to *B*/*N.* Furthermore, if a certain band *W* is shared by *Nᵤ* users communicating with a CDMA technique employing a code whose length is equal to L, each user is given a useful band whose bandwidth is equal to *W*/*(L*N_{U}).* According to the present method, each user of the OFDM telecommunication system 1 avails of a band equal to *B*/*(N*L*N_{U}).* Therefore, if the number *N* of subcarriers decreases, it is still possible to keep constant the band accorded to each user by dynamically varying either the CDMA code length L, as previously described, or the number N_{U} of users who can transmit at the same time (that is the number of further signals which can be transmitted at the same time), allowing to keep constant the transmission quality for the users transmitting.

Therefore, the present system and method allow to increase the exploitation of the band of a channel 3, transparently to the users having dedicated subbands. Given an existing channel 3 having a band shared among a plurality of existing telecommunication systems 5₁, 5₂, ..., 5ₙ, it is possible to manage more communications, thus providing more services, without affecting the pre-existing communications. More in particular, it is no more necessary to assign dedicated subbands to users rarely transmitting: when users intend to transmit, the present technique allows to use previously unused subbands, transparently to said users and to the users of the telecommunication systems 5₁, 5₂, ..., 5ₙ.

Furthermore, the present technique allows to manage a particular situation which, in real wireless systems, is likely to occur. In particular, in case a user having his dedicated subband needs more bandwidth to transmit, it is no more necessary to rearrange all the subband allocation scheme to assign to the user one or more subbands adjacent to his dedicated subband. By using the present method, the user is given an additional subband, even not adjacent to his dedicated subband. The same happens in case the user requiring more bandwidth does not use an existing telecommunication system 5₁, 5₂, ..., 5n.

Finally, it is clear that numerous variations and modifications may be made to the system and method described and illustrated herein, all falling within the scope of the invention as defined in the attached claims.

In particular, even if the OFDM telecommunication system 1 has been described in terms of hardware components, all the described functionalities may be implemented by software modules.

In addition, the allocation of the further signal on the available free subbands may be different from the described one. For example, the further signal may be allocated onto one or more free subbands, depending on the bandwidth of the further signal and the bandwidth of the free subbands, so as to minimize the number of used free subbands. In the alternative, any other spreading algorithm may be used, intermediate between a complete spreading of the one or more further signals onto all the free subbands described above and the minimum subband allocation.

Furthermore, the method may use as free subbands only the guard bands, even if in this case the efficiency is lowered.

## Claims

1. A method for transmitting further signals originating from users on a channel having a transmission band comprising guard bands and subbands dedicated to be used by respective telecommunication systems, said dedicated subbands, when used by the respective telecommunication systems, being occupied by transmission signals; the method comprising:
● detecting the presence of free subbands not occupied by any transmission signal, said free subbands comprising the dedicated subbands not used by the respective telecommunication systems; and
● transmitting the further signals on OFDM subcarriers having frequencies within the free subbands;
**characterized in that** said free subbands further comprise the guard bands, and **in that** transmitting the further signals comprises:
● multiplying each further signal by a respective CDMA code so as to spread a respective signal band of said further signal over one or more respective free subbands wherein said respective CDMA code has a length which is computed on the basis of said respective signal band and of an overall bandwidth of the free subbands so as to cause said respective signal band to be spread over said respective free subbands;
● transmitting each further signal multiplied by the respective CDMA code on the OFDM subcarriers having frequencies within the respective free subbands,
● detecting variations in the number of the free subbands; and,
● in response to a detected variation in the number of the free subbands, keeping constant a transmission throughput of one or more of the users by varying the lengths of the CDMA codes or the number of the further signals which are transmitted at a same time.

2. The method of claim 1, wherein the users comprise a user using one or more of the dedicated subbands to transmit and needing more bandwidth to transmit.

3. A method comprising transmitting further signals using the method claimed in claim 1 or 2, and comprising receiving said further signals by
● detecting first subbands of the transmission band which are free at a first time instant;
● detecting if the first subbands are occupied at a second time instant later than the first one; and
● if at the second time instant the first subbands are occupied,
- receiving signals carried on the OFDM subcarriers having frequencies within the first subbands, and
- reconstructing the further signals by multiplying the received signals by the CDMA codes.

4. An OFDM telecommunication system (1) comprising means (2,4) configured to implement the method claimed in any preceding claim.

## Patentansprüche

1. Verfahren zum Übertragen von weiteren, von Benutzern stammenden Signalen auf einem Kanal mit einem Übertragungsband umfassend Sicherheitsbänder und Teilbänder, zugewiesen zur Verwendung durch entsprechende Telekommunikationssysteme, wobei die zugewiesenen Teilbänder, wenn sie durch die entsprechende Telekommunikationssysteme verwendet werden, mit Übertragungssignalen belegt sind; und wobei das Verfahren folgendes umfasst:
- Detektieren der Anwesenheit von freien Teilbändern, die mit keinem Übertragungssignal belegt sind, wobei die freien Teilbänder die nicht durch die entsprechenden Telekommunikationssysteme verwendeten zugewiesenen Teilbänder umfassen; und
- Übertragen der weiteren Signale auf OFDM-Zwischenträgern mit Frequenzen innerhalb der freien Teilbänder;
**dadurch gekennzeichnet, dass** die freien Teilbänder ferner die Sicherheitsbänder umfassen, und dass das Übertragen der weiteren Signale folgendes umfasst:
- Vervielfachen jedes weiteren Signals durch einen entsprechenden CDMA-Code, um ein entsprechendes Signalband des weiteren Signals über ein oder mehrere entsprechende freie Teilbänder zu spreizen, wobei der entsprechende CDMA-Code eine Länge aufweist, welche auf der Basis des entsprechenden Signalbands und einer Gesamtbandbreite der freien Teilbänder berechnet wird, um eine Spreizung des entsprechenden Signalbands über die entsprechenden freien Teilbänder zu erzeugen;
- Übertragen jedes durch den entsprechenden CDMA-Code vervielfachten weiteren Signals auf den OFDM-Zwischenträgern mit Frequenzen innerhalb der entsprechenden freien Teilbänder;
- Detektieren von Variationen in der Anzahl der freien Teilbänder; und
- in Antwort auf die detektierte Variation in der Anzahl der freien Teilbänder, Konstanthalten eines Übertragungsdurchsatzes von einem oder mehreren Benutzern durch Variieren der Längen der CDMA-Codes oder der Anzahl der weiteren Signale, welche zur gleichen Zeit übertragen werden.

2. Verfahren nach Anspruch 1, wobei die Benutzer einen Benutzer umfassen, der ein oder mehrere der zugewiesenen Teilbänder zur Übertragung benutzt und mehr Übertragungsbandbreite benötigt.

3. Verfahren umfassend das Übertragen von weiteren Signalen unter Verwendung des Verfahrens gemäß Anspruch 1 oder 2, und ferner umfassend das Empfangen der weiteren Signale durch
- Detektieren erster Teilbänder des Übertragungsbands, die zum gleichen Zeitpunkt frei sind;
- Detektieren, ob die ersten Teilbänder zu einem zweiten Zeitpunkt belegt sind, der später als der erste Zeitpunkt ist; und
- wenn zu dem zweiten Zeitpunkt die ersten Teilbänder belegt sind,
- Empfangen von auf den OFDM-Zwischenträgern getragenen Signalen mit Frequenzen innerhalb der ersten Teilbänder, und
- Rekonstruieren der weiteren Signale durch Vervielfachen der empfangenen Signale durch die CDMA-Codes.

4. OFDM-Telekommunikationssystem (1) umfassend Mittel (2, 4), die dazu angepasst sind, das Verfahren gemäß einem der vorstehenden Ansprüche auszuführen.

## Revendications

1. Procédé pour transmettre des signaux supplémentaires provenant d'utilisateurs sur un canal ayant une bande de transmission comprenant des bandes de garde et des sous-bandes dédiées à une utilisation par des systèmes de télécommunication respectifs, lesdites sous-bandes dédiées, lorsqu'elles sont utilisées par les systèmes de télécommunication respectifs, étant occupées par des signaux de transmission ; le procédé comprenant :
● la détection de la présence de sous-bandes libres non occupées par un quelconque signal de transmission, lesdites sous-bandes libres comprenant les sous-bandes dédiées non utilisées par les systèmes de télécommunication respectifs ; et
● la transmission des signaux supplémentaires sur des sous-porteuses OFDM ayant des fréquences à l'intérieur des sous-bandes libres ;
**caractérisé en ce que** lesdites sous-bandes libres comprennent en outre les bandes de garde, et **en ce que** la transmission des signaux supplémentaires comprend :
● la multiplication de chaque signal supplémentaire par un code CDMA respectif afin d'étaler une bande de signal respective dudit signal supplémentaire sur une ou plusieurs sous-bandes libres respectives, où ledit code CDMA respectif a une longueur qui est calculée sur la base de ladite bande de signal respective et d'une largeur de bande globale des sous-bandes libres afin d'amener ladite bande de signal respective à être étalée sur lesdites sous-bandes libres respectives ;
● la transmission de chaque signal supplémentaire multiplié par le code CDMA respectif sur les sous-porteuses OFDM ayant des fréquences à l'intérieur des sous-bandes libres respectives ;
● la détection de variations dans le nombre des sous-bandes libres ; et,
● en réponse à une variation détectée dans le nombre des sous-bandes libres, le fait de maintenir constant un débit de transmission d'un ou plusieurs des utilisateurs en faisant varier les longueurs des codes CDMA ou le nombre des signaux supplémentaires qui sont transmis en même temps.

2. Procédé selon la revendication 1, dans lequel les utilisateurs comprennent un utilisateur utilisant une ou plusieurs des sous-bandes dédiées pour transmettre et ayant besoin de plus de largeur de bande pour transmettre.

3. Procédé comprenant la transmission de signaux supplémentaires utilisant le procédé revendiqué dans la revendication 1 ou 2, et comprenant la réception desdits signaux supplémentaires en
● détectant des premières sous-bandes de la bande de transmission qui sont libres à un premier instant dans le temps ;
● détectant si les premières sous-bandes sont occupées à un second instant dans le temps postérieur au premier ; et
● si au second instant dans le temps, les premières sous-bandes sont occupées,
● recevoir des signaux acheminés sur les sous-porteuses OFDM ayant des fréquences à l'intérieur des premières sous-bandes, et
● reconstruire les signaux supplémentaires en multipliant les signaux reçus par les codes CDMA.

4. Système de télécommunication OFDM (1) comprenant des moyens (2, 4) configurés pour mettre en oeuvre le procédé revendiqué dans l'une quelconque des revendications précédentes.
